# EUROPÄISCHE PATENTSCHRIFT

(11) **EP 0 543 117 B1**
(45) Veröffentlichungstag und Bekanntmachung des Hinweises auf die Patenterteilung: **17.08.1994**
(21) Anmeldenummer: 92116622.9
(22) Anmeldetag: 29.09.1992
(51) Int. Cl.: F16L 39/00, F16L 37/084

(54) **Kupplungssystem für Leitungen**
Coupling system for pipes
Système d'accouplement pour tuyaux

(30) Priorität: 19.11.1991 DE 4138064
(43) Veröffentlichungstag der Anmeldung: 26.05.1993
(73) Patentinhaber: Kreuzer GmbH + Co. OHG, D-82178 Puchheim (DE)
(72) Erfinder: Martin, Karl-Heinz, W-8082 Grafrath (DE)
(74) Vertreter: Prüfer, Lutz H., Dipl.-Phys.

(56) Entgegenhaltungen:
- CH-A- 482 972
- FR-A- 657 043
- US-A- 3 282 612
- US-A- 4 186 946

## Beschreibung

Die Erfindung bezieht sich auf ein Kupplungssystem für Leitungen nach dem Oberbegriff des Patentanspruchs 1.

Es ist auf verschiedenen technischen Gebieten bekannt, eine Mehrzahl von Leitungen, die unverwechselbar miteinander verbunden werden sollen, oder aber die diese Leitungen verbindenden Kupplungselemente mit einer Kodierung zu versehen, die eine Zuordnung der zusammengehörenden Leitungen erlaubt.

So ist es bekannt. elektrische oder Signalleitungen sowohl in der Hausinstallation als auch beim elektrotechnischen und elektronischen Gerätebau mit einer Farbkennzeichnung zu versehen.
Auch Leitungen für gasförmige oder flüssige Medien werden in der Regel mit einer Farbkennzeichnung versehen.
Eine Fehlverbindung solcher Leitungen ist damit jedoch nicht ausgeschlossen.

Für Fälle, in denen eine Fehlverbindung mit absoluter Sicherheit ausgeschlossen werden muß, wie bei in bestimmten Verbindungen zur Explosion oder Entzündung neigenden oder zur Patientenversorgung bereitzustellenden Medien, werden auch kodierte Kupplungselemente eingesetzt.

Bekannt ist dabei der Einsatz von Steckverbindungen aus sogenannten Stecknippeln und Kupplungen, bei denen der Stecknippel im vorderen, zum Eingriff in die Kupplung bestimmten Abschnitt eine bestimmte geometrische Form (Kreis, Dreieck, Viereck etc.) aufweist, die mit einer entsprechenden Form der inneren Oberfläche der dazugehörigen Kupplung korrespondiert derart, daß nur der Eingriff von Stecknippeln und Kupplungen korrespondierender Form möglich ist.
Bekannt sind weiterhin Stecknippel-Kupplung-Systeme, bei denen sich in einer bestimmten Winkellage in der Kupplung eine Nocke und in gleicher Winkellage des dazugehörigen Stecknippels in dessen Vorderteil eine Nut befindet, wobei sich die Winkellage von Elementepaar zu Elementepaar unterscheidet, so daß wiederum nicht zur Kupplung gehörende Stecknippel auch nicht in die Kupplung passen.
Diese Arten von Stecknippel-Kupplungs-Systemen sind aufwendig in der Herstellung und dementsprechend teuer.

Es ist Aufgabe der Erfindung, ein Kupplungssystem für Leitungen bereitzustellen, das eine Verbindung nicht zueinander gehöriger Leitungen mit Sicherheit verhindert, variabel einsetzbar und einfach und kostengünstig in der Herstellung ist.

Diese Aufgabe wird durch ein Kupplungssystem, das die Merkmale des Patentanspruchs 1 aufweist, gelöst.

Zweckmäßige Ausgestaltungen der Erfindung sind den Unteransprüchen zu entnehmen.

Ein Ausführungsbeispiel ist anhand der Figuren erläutert.

Von der Figuren zeigen:
- Fig. 1: eine Querschnittsdarstellung einer Ausführungsform mit sieben in einen Halter eingelegten zusammengefügten Kupplungslement-Paaren ,
- Fig. 2: eine perspektivische Darstellung der gleichen Ausführungsform mit zwei eingelegten Kupplungselement-Paaren,
- Fig. 3: eine Querschnittsdarstellung eines zusammengefügten Kupplungselement-Paares mit angefügten Schlauchabschnitten.

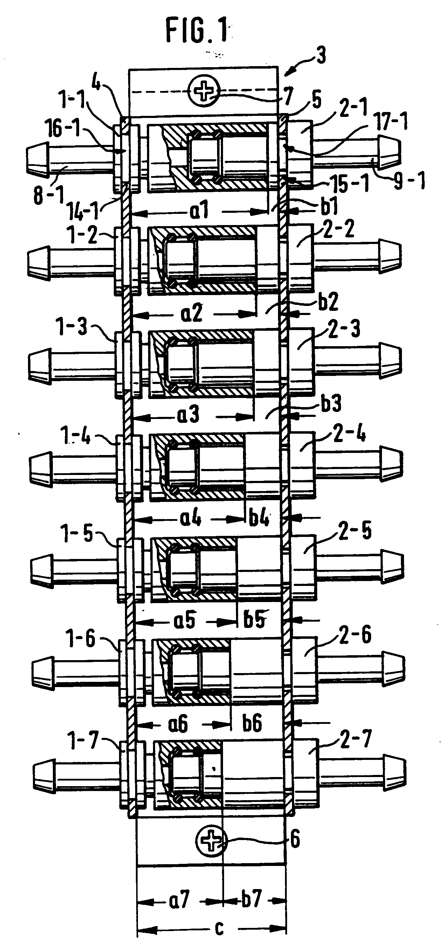

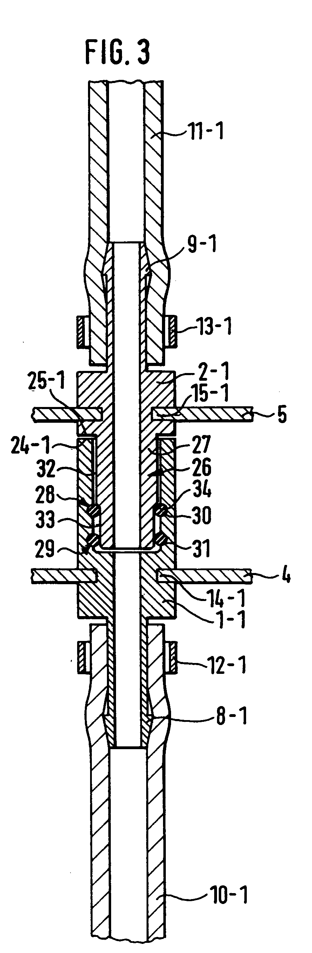

Wie Fig. 1 bis 3 zeigen, weist das Kupplungssystem nach der Ausführungsform mehrere rotationssysmmetrische Kupplungen 1-1 bis 1-7 und Stecknippel 2-1 bis 2-7 und einen Halter 3 mit einem ersten und einem zweiten Halteteil 4 und 5 auf, der die zusammengefügten Stecknippel-Kupplung-Paare aufnimmt und seinerseits Bohrungen 6 und 7 zur Befestigung, etwa an einem Installationssystem, aufweist.

Die Kupplungen 1-1 bis 1-7 und Stecknippel 2-1 bis 2-7 weisen Schlauchtüllen 8-1 bis 8-7 und 9-1 bis 9-7 zur Befestigung je eines ein Medium(Sauerstoff, Narkosegas, Stickstoff, Vakuum etc.) führenden Schlauches 10 und 11 mittels Schlauchklemmen 12 und 13 auf.

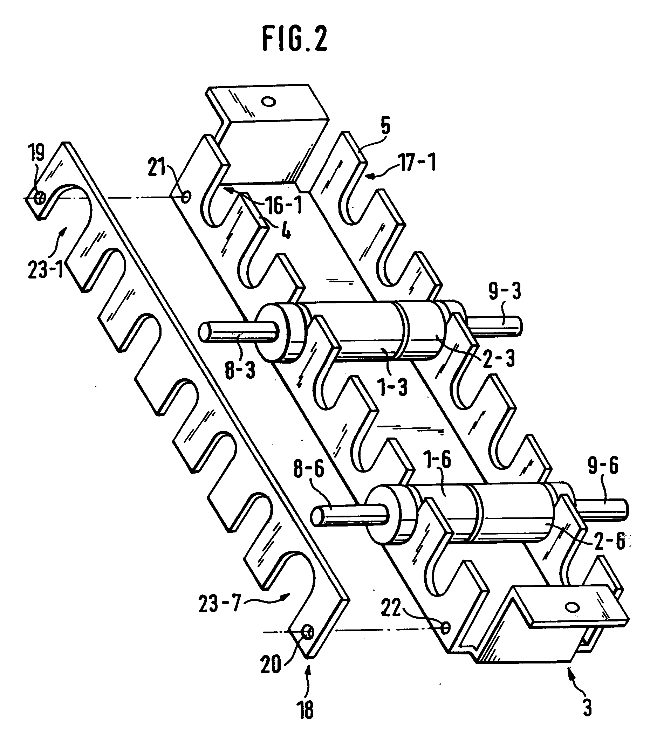

Sie weisen weiter Ringnuten 14-1 bis 14-7 bzw. 15-1 bis 15-7 unterschiedlicher Tiefe auf, in die jeweils der Rand von Ausschnitten 16-1 bis 16-7 bzw. 17-1 bis 17-7 des ersten Halteteils 4 bzw. des zweiten Halteteils 5 der Halterung 3 eingreift, wenn das Stecknippel-Kupplung-Paar gemäß Fig. 2 von oben in den Halter 3 eingeschoben wird.
Ein Verriegelungsblech 18 mit Bohrungen 19 und 20 ist, wie in Fig. 2 gezeigt, auf das Halteteil 4 aufschiebbar und über Bohrungen 21 und 22 im Halter 3 mit diesem verbindbar. Das Verriegelungsblech weist Ausschnitte 23-1 bis 23-7 auf, die im aufgeschraubten Zustand einen Abschnitt des Mantels der Kupplungen 1-1 bis 1-7 bzw. der Stecknippel 2-1 bis 2-7 umschließen.

Die Kupplungen 1-1 bis 1-7 weisen jeweils eine unterschiedliche Länge a1 bis a7 zwischen ihrer jeweiligen Ringnut 14-1 bis 14-7 und ihrer im zusammengefügten Zustand dem Stecknippel zugewandten Stirnfläche 24-1 bis 24-7 auf, wobei sich die Längen in der Folge a1 bis a7 verringern. Ahnlich, aber in umgekehrter Folge, unterscheiden sich die Längen b1 bis b7 zwischen der jeweiligen Ringnut 15-1 bis 15-7 und der der Kupplung zugewandten Stirnfläche 25-1 bis 25-7 der Stecknippel 2-1 bis 2-7 derart, daß die Summe der Längen (a1 + b1), (a2 + b2), ..., (a7 + b7) zusammengehöriger Kupplungen 1-1, 1-2, ..., 1-7 und Stecknippel 2-1, 2-2, ..., 2-7 den gleichen Wert c ergibt, während die Summe der Längen nicht zusammengehöriger Kupplungen und Stecknippel einen kleineren oder größeren Wert als c ergibt. Die Länge c ist gleich dem Abstand der beiden Halteteile 4 und 5 der Halterung 3.

Die Kupplungen 1-1 bis 1-7 weisen jeweils eine zylinderförmige Ausarbeitung 26 zur Aufnahme des Vorderteils 27 der Stecknippel 2-1 bis 2-7 auf, in die noch zwei Ringnuten 28 und 29 in einem Abstand voneinander eingearbeitet sind. Die Ringnuten nehmen jeweils eine Dichtung (O-Ring) 30 und 31 auf.

Die Stecknippel 2-1 bis 2-7 weisen ein Vorderteil 27 in Gestalt eines abgestuften Zylinders auf, wobei der Übergang zwischen den beiden Stufen 32 und 33 des Zylinders durch eine unter 45° abgeschrägte Fase 34 gebildet ist. Der Durchmesser des vorderen Zylinders 33 relativ zum Innendurchmesser der O-Ringe 30 und 31 und der des hinteren Zylinders 32 relativ zum Innendurchmesser der Ausarbeitung 26 der Kupplung sind derart gewählt, daß nur bei vollständig (bis zum Anstoßen der einander zugewandten Stirnflächen 24 und 25, allenfalls mit einem kleinen,. durch Fertigungstoleranzen und das elastische Anstoßen der Fase am O-Ring 30 bedingten Spiel) in die Kupplung eingeführtem Stecknippel eine dichte Passung des Vorderteils 27 des Stecknippels mit den O-Ringen hergestellt wird.

Das Kupplungssystem wird so angewendet, daß an jedem der im Rahmen einer Installation mit Schläuchen 11-1 bis 11-7 (nur 11-1 gezeigt) zu verbindenden Schläuche 10-1 bis 10-7 (nur 10-1 gezeigt) mittels Schlauchklemmen 12-1 bis 12-7 (nur 12-1 gezeigt) eine Kupplung 1-1 bis 1-7 und an jedem der Schläuche 11-1 bis 11-7 mittels Schlauchklemmen 13-1 bis 13-7 (nur 13-1 gezeigt) ein Stecknippel 2-1 bis 2-7 befestigt ist. Dabei sind an Schläuchen, die zur Leitung des gleichen Mediums vorgesehen sind, zusammengehörige Kupplungen und Stecknippel, d. h. solche, bei denen die Summe der Längen a und b den Wert c, der gleich dem Abstand der Halteteile 4 und 5 des Halters 3 ist, befestigt.

Der Halter 3 wird über seine Bohrungen 6 und 7 an einen Träger eines Installationssystems oder einfach an die Wand geschraubt. Zur Verbindung der Schläuche 10-1 bis 10-7 mit den Schläuchen 11-1 bis 11-7 werden die an den Schläuchen 11-1 bis 11-7 befestigten Stecknippel 2-1 bis 2-7 einfach in die an den Schläuchen 10-1 bis 10-7 befestigten Kupplungen 1-1 bis 1-7 bis zum Anstoßen ihrer einander zugewandten Stirnflächen 24-1 bis 24-7 (nur 24-1 gezeigt) und 25-1 bis 25-7 (nur 25-1 gezeigt) eingeschoben und im zusammengefügten Zustand von oben jeweils in ein Paar Auschnitte 16-1, 17-1 bis 16-7, 17-7 der Halteteile 4 und 5 des Halters eingeschoben. Ein durch den elastischen Kontakt zwischen der Fase (34) am Vorderteil des Stecknippels (2-1) und dem O-Ring (30) in der Kuppplung (1-1) ermöglichtes leichtes Zusammendrücken der Teile erleichtert dieses Einschieben in den Halter. Würden irrtümlich eine Kupplung und ein Stecknippel zusammengefügt, die nicht zusammengehören, d.h. deren Schläuche unterschiedliche Medien führen sollen - etwa die am Schlauch 10-1 angebrachte Kupplung 1-1 und der am Schlauch 11-2 angebrachte Stecknippel 2-2 - , so erweist sich beim Versuch des Einschiebens in den Halter 3, daß der Abstand der jeweiligen Ringnuten - im Beispielfall der Abstand der Ringnuten 14-1 und 15-2, d. h. die Summe der Abstände a1 und b2 - nicht dem Abstand c der Halteteile 4 und 5 entspricht. Ist der Abstand der Ringnuten größer als der Abstand der Halteteile, so läßt sich das Stecknippel-Kupplung-Paar überhaupt nicht in den Halter einschieben. Ist er geringer, so könnte allenfalls nach Auseinanderziehen der Verbindung ein Einschieben erfolgen.
Davon abgesehen, daß ein solches bewußtes Auseinanderziehen der Steckverbindung bei einem Fachmann praktisch ausgeschlossen werden kann, würde dann die Dichtung zwischen Stecknippel und Kupplung aufgehoben, so daß das Medium an der Schnittstelle entweichen und damit ein zusätzliches Fehlersignal gegeben würde.

Sind alle ordnungsgemäß zusammengefügten Stecknippel-Kupplung-Paare 2-1, 1-1 bis 2-7, 1-7 in den Halter 3 eingeschoben, so wird das Verriegelungsblech 18 aufgeschoben und mit dem Halter 3 verschraubt, wodurch die Stecknippel-Kupplung-Paare gegen Herausfallen bzw. versehentliches Entfernen aus dem Halter und damit verbundenes Lösen der Verbindung gesichert werden.

Die verwendeten Stecknippel und Kupplungen sind reine Drehteile und daher einfach und kostengünstig herstellbar.

Durch dem Anwendungszweck angepaßte Wahl der Längenabstufungen der Stecknippel und Kupplungen ist das System auf verschieden komplexe Anwendungen variabel anpaßbar.

Es ist sowohl für gasförmige als auch flüssige Medien anwendbar, eine Abwandlung in Stecker und Buchsen abgestufter Längen zum Anschluß an elektrische Leitungen ist aber auch zur Verbindung von elektrischen bzw. Signalleitungen geeignet.

Der vorgesehene Halter kann - wie in der Ausführungsform - für mehrere Kupplungslement-Paare gleichzeitig vorgesehen oder es können separate Halter für jeweils ein solches Paar ausgeführt sein.

Ggf. können die Ringnuten 14-1 bis 14-7, 15-1 bis 15-7 zum Eingriff mit dem Halter 3 auch weggelassen werden, und der Eingriff kann mittels der der Schlauchtülle zugewandten Stirnflächen der Stecknippel und Kupplungen erfolgen.

Eine weitere Abwandlung besteht in der Ausführung der Kupplungselemente mit Schraubverbindungen. Hierbei ist kein Halter zum Zusammenhalten der Verbindung nötig, sondern lediglich ein Längen-Normal für die Gesamtlänge der "richtigen" Verbindung.

## Patentansprüche

1. Kupplungssystem für Leitungen (10-1 bis 10-7,11-1 bis 11-7) mit einer Mehrzahl jeweils mit ersten Leitungen (10-1 bis 10-7) verbundener erster Kupplungslemente und einer Mehrzahl jeweils mit zweiten Leitungen (11-1 bis 11-7) verbundener zweiter Kupplungselemente (1-1 bis 1-7,2-1 bis 2-7), bei dem jeweils ein erstes (1-1) mit einem bestimmten zweiten Kupplungselement (2-1) zusammengefügt ist, dadurch gekennzeichnet, daß eine kennzeichnung zusammengehöriger erster und zweiter Kupplungselemente (1-1,2-1) derart erfolgt, daß die zusammengefügten zusammengehörigen Kupplungselemente (1-1,2-1) eine vorbestimmte Länge (c) aufweisen, während nicht zusammengehörige zusammengefügte Kupplungselemente eine von dieser vorbestimmten Länge abweichende Länge aufweisen.

2. Kupplungssystem nach Anspruch 1, gekennzeichnet durch eine Halterung (3) für zwei zusammengefügte Kupplungselemente, die zwei Halteteile (4,5) in einem Abstand (c) voneinander aufweist, der gleich der Länge (c) der zusammengefügten zusammengehörigen Kupplungselemente (1-1,2-1) ist.

3. Kupplungssystem nach Anspruch 1 oder 2, dadurch gekennzeichnet, daß die Kupplungselemente (1-1 bis 1-7,2-1 bis 2-7) jeweils einen zum Ineinandergreifen mit einem der Halteteile (4,5) des Halters (3) ausgebildeten Eingriffsabschnitt (14-1 bis 14-7,15-1 bis 15-7) aufweisen und der Abstand (c) der Eingriffsabschnitte der zusammengefügten Kupplungselemente die die Kodierung darstellende Länge ist.

4. Kupplungssystem nach einem der Ansprüche 1 bis 3, dadurch gekennzeichnet, daß der Abstand der Eingriffsabschnitte (14-1,15-1) der beiden zusammengefügten Kupplungselemente die Summe des Abstandes (a1) zwischen dem Eingriffsabschnitt (14-1) und der einen Anstoßkontakt mit dem zweiten Kupplungselement herstellenden Stirnfläche (24-1) des ersten Kupplungselements (1-1) und des Abstandes (b1) zwischen dem Eingriffsabschnitt (15-1) und der den Anstoßkontakt mit dem ersten Kupplungselement herstellenden Stirnfläche (25-1)des zweiten Kupplungselements (2-1) ist.

5. Kupplungssystem nach Anspruch 3 oder 4, dadurch gekennzeichnet, daß die Halteteile (4,5) der Halterung (3) Blechteile mit einer einen Teil des Umfangs der Eingriffsabschnitte (14-1,15-1) der ersten bzw. zweiten Kupplungselemente (1-1,2-1) umfassenden Ausnehmung (16-1,17-1) sind.

6. Kupplungssystem nach einem der Ansprüche 3 bis 5, dadurch gekennzeichnet, daß die Eingriffsabschnitte der Kupplungselemente (14-1,15-1) Ringnuten sind.

7. Kupplungssystem nach einem der Ansprüche 3 bis 6, dadurch gekennzeichnet, daß die Eingriffsabschnitte der Kupplungselemente durch die einem jeweiligen Leitungsanschluß (8-1,9-1) zugewandten Stirnflächen der Kupplungselemente (1-1,2-1) gebildet sind.

8. Kupplungssystem nach einem der Ansprüche 2 bis 7, dadurch gekennzeichnet, daß die Verbindung zwischen den zusammengefügten Kupplungselementen (1-1,2-1 bis 1-7,2-7) in Längsrichtung eine vorbestimmte Elastizität aufweist derart, daß zum Einführen der zusammengefügten Kupplungselemente in die Halterung (3) ein geringfügiges Zusammendrücken der Kupplungselemente erfolgen kann.

9. Kupplungssystem nach einem der Ansprüche 1 bis 8, dadurch gekennzeichnet, daß die mit den Kupplungselementen verbundenen Leitungen (10-1 bis 10-7, 11-1 bis 11-7) stoffliche Medien führen.

10. Kupplungssystem nach einem der Ansprüche 1 bis 8, dadurch gekennzeichnet, daß die mit den Kupplungselementen verbundenen Leitungen Strom-bzw. Signalleitungen sind.

11. Kupplungssystem nach Anspruch 9, gekennzeichnet durch einen in eine Innennut (29) des zweiten Kupplungselementes (2) eingesprengten und mit der äußeren Oberfläche eines in dieses Kupplungselement eingeschobenen Vorderabschnitts (27) des ersten Kupplungselements in Berührung stehenden O-Ring (31) zur Abdichtung der Kupplungselemente gegeneinander.

12. Kupplungsystem nach Anspruch 11, gekennzeichnet durch zwei in zwei in Richtung der Längsachse einen Abstand aufweisende Innennuten (28,29) des zweiten Kupplungselements eingesprengte O-Ringe (30,31).

13. Kupplungssystem nach Anspruch 11 oder 12, dadurch gekennzeichnet, daß das im verbundenen Zustand in das zweite Kupplungselement (2-1) eingeführte Vorderteil des ersten Kupplungselements (1-1) zwei zylindrische Abschnitte unterschiedlichen Durchmessers (32,33) und eine die beiden Abschnitte (32,33) unter einem Winkel von 45° verbindenden Fase (34) derart aufweist, daß der Abschnitt geringeren Durchmessers (33) der in das zweite Kupplungselement (2-1) weiter hineinragende ist und daß die Fase (34) im Zustand vollständiger Einführung des ersten Kupplungselements (1-1) in das zweite Kupplungselement (2-1) mit dem O-Ring (30) einen dichten Kontakt bildet, während der Kontakt bei nicht vollständiger Einführung des ersten Kupplungselements in das zweite Kupplungselement nicht dicht ist.

14. Kupplungssystem nach einem der Ansprüche 9 oder 11 bis 13, dadurch gekennzeichnet, daß wenigstens eine der Leitungen (10-1,11-1) ein Schlauch ist und dieser mittels einer Schlauchklemme (12-1,13-1) mit dem jeweiligen Kupplungselement (1-1,2-1) verbunden ist.

## Claims

1. A coupling system for pipes (10-1 to 10-7, 11-1 to 11-7), with a plurality of first coupling elements respectively connected to the first pipes (10-1 to 10-7) and a plurality of second coupling elements (1-1 to 1-7, 2-1 to 2-7) respectively connected to the second pipes (11-1 to 11-7), wherein a first (1-1) is respectively joined to a specific second coupling element (2-1), characterized in that an identification of associated first and second coupling elements (1-1, 2-1) is effected in such a way that the joined associated coupling elements (1-1, 2-1) have a predetermined length (c), whereas non-associated joined coupling elements have a length diverging from this predetermined length.

2. A coupling system according to claim 1, characterized by a holding means (3) for two joined coupling elements that has two holding components (4, 5) at an interspacing (c) from each other which is equal to the length (c) of the joined associated coupling elements (1-1,2-1).

3. A coupling system according to claim 1 or 2, characterized in that the coupling elements (1-1 to 1-7, 2-1 to 2-7) have respectively an engagement section (14-1 to 14-7, 15-1 to 15-7) for mutual engagement with one of the holding components (4, 5) of the holding means (3), and that the interspacing (c) of the engagement sections of the joined coupling elements is the length representing the coding.

4. A coupling system according to one of claims 1 to 3, characterized in that the interspacing of the engagement sections (14-1, 15-1) of the two joined coupling elements is the sum of the distance (a1) between the engagement section (14-1) and the end face (24-1) of the first coupling element (1-1) producing a bearing contact with the second coupling element and of the distance (b1) between the engagement section (15-1) and the end face (25-1) of the second coupling element (2-1) producing a bearing contact with the first coupling element.

5. A coupling system according to claim 3 or 4, characterized in that the holding components (4, 5) of the holding means (3) are sheet metal parts with a recess (16-1, 17-1) that surrounds a portion of the periphery of the engagement sections (14-1, 15-1) of the first and second coupling elements (1-1, 2-1) respectively.

6. A coupling system according to one of claims 3 to 5, characterized in that the engagement sections (14-1, 15-1) of the coupling elements are annular grooves.

7. A coupling system according to one of claims 3 to 8, characterized in that the engagement sections of the coupling elements are formed by the end faces of the coupling elements (1-1, 2-1) facing a respective pipe connection (8-1, 9-1).

8. A coupling system according to one of claims 2 to 7, characterized in that the joint between the joined coupling elements (1-1, 2-1 to 1-7, 2-7) has a predetermined elasticity in the longitudinal direction in such a way that for introducing the joined coupling elements into the holding means (3), a slight compression of the coupling elements can be effected.

9. A coupling system according to one of claims 1 to 8, characterized in that the pipes (10-1 to 10-7, 11-1 to 11-7) connected to the coupling elements carry material substances.

10. A coupling system according to one of claims 1 to 8, characterized in that the pipes joined to the coupling elements are current or signal lines.

11. A coupling system according to claim 8, characterized by an O-ring (31) fitted into an inner groove (29) of the second coupling element (2) and being in contact with the outer surface of a front section (27) of the first coupling element inserted into said coupling element for sealing the coupling elements with respect to each other.

12. A coupling system according to claim 11, oharacterized by two O-rings (30, 31) fitted into internal grooves (28, 29) of the second coupling element and being interspaced in the direction of the longitudinal axis.

13. A coupling system according to claims 11 or 12, characterized in that the front portion of the first coupling element (1-1) which is introduced in the joined state into the second coupling element (2-1) has two cylindrical sections with different diameters (32, 33) and a bevel (34) joining the two sections (32, 33) at an angle of 45°, in such a way that the section with the smaller diameter (33) is the one that extends further into the second coupling element (2-1), and that the bevel (34) forms, in the state when the first coupling element (1-1) has been completely introduced into the second coupling element (2-1), a leakproof contact with the O-ring (30), whilst the contact is not leakproof when the first coupling element has not been completely introduced into the second coupling element.

14. A coupling system according to one of claims 9 or 11 to 13, characterized in that at least one of the pipes (10-1, 11-1) is a hose pipe and that the latter is joined to the respective coupling element (1-1, 2-1) by means of a hose clip (12-1, 13-1).

## Revendications

1. Dispositif d'accouplement pour des conduites (10-1 à 10-7, 11-1 à 11-7) avec une pluralité de premiers éléments d'accouplement reliés à des premières conduites (10-1 à 10-7) et une pluralité de deuxièmes éléments d'accouplement (1-1 à 1-7, 2-1 à 2-7) relié à des deuxièmes conduites (11-1 à 11-7), dans lequel un premier élément d'accouplement (1-1) est assemblé avec un deuxième élément d'accouplement (2-1) donné, caractérisé en ce qu'un repérage des premiers et deuxièmes éléments d'accouplement (1-1, 2-1) associés est réalisé par le fait que les éléments d'accouplement (1-1, 2-1) associés assemblés présentent une longueur prédéterminée (c), alors que les éléments d'accouplement non associés assemblés présentent une longueur différente de cette longueur prédéterminée.

2. Dispositif d'accouplement selon la revendication 1, caractérisé en ce qu'il comporte une fixation (3) pour deux éléments d'accouplement assemblés, qui présente deux parties de fixation (4, 5) à une distance (c) l'une de l'autre qui est égale à la longueur (c) des éléments d'accouplement associés (1-1, 1-2) assemblés.

3. Dispositif d'accouplement selon la revendication 1 ou 2, caractérisé en ce que les éléments d'accouplement (1-1 à 1-7, 2-1 à 2-7) présentent chacun une section de prise (14-1 à 14-7, 15-1 à 15-7) conçue en vue de la prise avec l'une des parties de fixation (4, 5) de la fixation (3) et la distance (c) des sections de prise des éléments d'accouplement assemblés est la longueur représentant le codage.

4. Dispositif d'accouplement selon l'une ou l'ensemble des revendications 1 à 3, caractérisé en ce que la distance des sections de prise (14-1, 15-1) des deux éléments d'accouplement assemblés correspond à la somme de la distance (al) entre la section de prise (14-1) et la face (24-1) du premier élément d'accouplement (1-1) formant un contact de butée avec le deuxième élément d'accouplement et la distance (bl) entre la section de prise (15-1) et la face (25-1) du deuxième élément d'accouplement (2-1) formant le contact de butée avec le premier élément de contact.

5. Dispositif d'accouplement selon la revendication 3 ou 4, caractérisé en ce que les parties de fixation (4, 5) de la fixation (3) sont des pièces en tôle avec un évidement (16-1, 17-1) entourant une partie de la circonférence des sections de prise (14-1, 15-1) du premier et du second éléments d'accouplement (1-1, 2-1).

6. Dispositif d'accouplement selon l'une ou l'ensemble des revendication 3 à 5, caractérisé en ce que les sections de prise des éléments d'accouplement (14-1, 15-1) sont des rainures annulaires.

7. Dispositif d'accouplement selon l'une ou l'ensemble des revendications 3 à 6, caractérisé en ce que les sections de prise des éléments d'accouplement sont formées par des faces des éléments d'accouplement (1-1, 1-2) orientées vers un raccord de conduite (8-1, 9-1) correspondant.

8. Dispositif d'accouplement selon l'une ou l'ensemble des revendications 2 à 7, caractérisé en ce que la liaison entre les éléments d'accouplement (1-1, 2-1 à 1-7, 2-7) assemblés présente dans le sens longitudinal une élasticité prédéterminée, de telle sorte qu'en vue de l'introduction des éléments d'accouplement assemblés dans la fixation (3), une légère compression des éléments d'accouplement soit possible.

9. Dispositif d'accouplement selon l'une ou l'ensemble des revendications 1 à 8, caractérisé en ce que les conduites (10-1 à 10-7, 11-1 à 11-7) reliées par les éléments d'accouplement transportent des fluides matériels.

10. Dispositif d'accouplement selon l'une ou l'ensemble des revendications 1 à 8, caractérisé en ce que les conduites reliées par les éléments d'accouplement sont des conduites de courant ou de signal.

11. Dispositif d'accouplement selon la revendication 9, caractérisé en ce qu'il comporte, pour assurer l'étanchéité de l'élément d'accouplement, un joint torique (31) enfoncé dans une rainure intérieure (29) du deuxième élément d'accouplement (2) et en contact avec la surface extérieure d'une section antérieure (27) du premier élément d'accouplement introduit dans cet élément d'accouplement.

12. Dispositif d'accouplement selon la revendication 11, caractérisé en ce qu'il comporte deux joints toriques (30, 31) enfoncés dans deux rainures intérieures (28, 29) du deuxième élément d'accouplement présentant un écart dans le sens de l'axe longitudinal.

13. Dispositif d'accouplement selon la revendication 11 ou 12, caractérisé en ce que la partie antérieure du premier élément d'accouplement (1-1) introduite dans l'état relié dans le deuxième élément d'accouplement (2-1) présente deux secteurs cylindriques de diamètres différents (32, 33) et un chanfrein (34) reliant les deux secteurs (32, 33) sous un angle de 45°, de telle sorte que le secteur de petit diamètre (33) soit celui qui dépasse le plus loin dans le deuxième élément d'accouplement (2-1) et que lorsque le premier élément d'accouplement (1-1) est complètement introduit dans le deuxième élément d'accouplement (2-1), le chanfrein (34) forme avec le joint torique (30) un contact étanche, alors que le contact n'est pas étanche lorsque le premier élément d'accouplement n'est pas entièrement introduit dans le deuxième élément d'accouplement.

14. Dispositif d'accouplement selon l'une ou l'ensemble des revendications 9 ou 11 à 13, caractérisé en ce qu'au moins une des conductrices (10-1, 11-1) est un tuyau et celui-ci est relié au moyen d'une pince à tuyaux (12-1, 13-1) avec l'élément d'accouplement (1-1, 2-1) correspondant.
